# EUROPEAN PATENT SPECIFICATION

(11) **EP 2 058 599 B1**
(45) Date of publication and mention of the grant of the patent: **01.05.2013**
(21) Application number: 07721487.2
(22) Date of filing: 18.06.2007
(51) Int. Cl.: F24F 13/22, F16L 33/28

(54) **A CONNECTING DEVICE USED FOR CONNECTION OF DRAINAGE PIPES**
ZUR VERBINDUNG VON ABLAUFROHREN VERWENDETE VERBINDUNGSVORRICHTUNG
DISPOSITIF DE RACCORD UTILISÉ POUR RACCORDER DES CONDUITES DE DRAINAGE

(30) Priority: 31.08.2006 CN 200620063963 U
(43) Date of publication of application: 13.05.2009
(73) Proprietor: Gree Electric Appliances Inc. Of Zhuhai, Zhuhai, Guangdong 519070 (CN)
(72) Inventor: ZHANG, Tao, Zhuhai, Guangdong 519070 (CN); LUO, Sheng, Zhuhai, Guangdong 519070 (CN); WANG, Hongxia, Zhuhai, Guangdong 519070 (CN); YE, Qiangwei, Zhuhai, Guangdong 519070 (CN); ZHANG, Yunjuan, Zhuhai, Guangdong 519070 (CN)
(74) Representative: Stiebe, Lars Magnus
(86) International application number: PCT/CN2007/001914
(87) International publication number: WO 2008/028390

(56) References cited:
- CN-A- 1 517 633
- CN-Y- 2 677 811
- JP-A- 6 159 708
- JP-A- 9 112 948
- JP-A- 2005 076 949
- JP-A- 2006 145 064
- JP-A- 2006 207 870
- JP-U- 58 158 226
- KR-A- 20050 017 912
- KR-A- 20060 082 458

## Description

### FIELD OF THE INVENTION

The present invention relates to a connecting device for drain pipes, more particularly, to a connecting device for connecting a drainage pipe tie-in with a drainage pipe head, which can be applied in the drainage system of air conditioners.

### BACKGROUND OF THE INVENTION

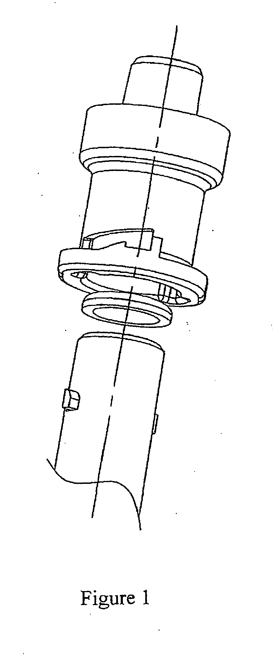

At present, in a domestic air conditioner, the snakeskin pipe which preserves heat is normally used as the drain pipe connected with the water drip pan. This drain pipe has a pipe tie-in, which is normally made of ABS materials and connected with a pipe head by means of a rotatable locking connection, and the pipe tie-in has an end against an inner rubber ring of the drain pipe so as to prevent water leakage. Figure 1 illustrates a commonly used connection of drain pipes in air conditioners of prior art, wherein two locking blocks are symmetrically disposed on an outer wall of the drainage pipe tie-in connected with the water drip pan, and L-shaped slots are disposed on an inner wall of the drainage pipe head corresponding to the two locking blocks, for sealing purpose a groove is disposed on the end of the drainage pipe tie-in in order to receive the inner rubber ring; when it is in use, the two locking blocks on the drainage pipe tie-in are guided by the L-shaped slots on the inner wall of the drainage pipe head, which enables the drain pipe to rotate along the slots until it reaches a bottom end of the slots and gets into contact with the inner rubber ring, so that a fixed connection is realized. However, stresses are concentrated in the slots of the drainage pipe head and in the groove for the inner rubber ring, also stresses are concentrated in the ABS material made drainage pipe tie-in and in the drainage pipe head themselves, therefore, when the drain pipe is assembled, stresses on contacting surfaces are increased which may cause break; moreover, a proper contact can not be ensured between the end of the drainage pipe tie-in and the inner rubber ring of the drain pipe due to the problems caused by the dimensional tolerance of the drainage pipe tie-in and the material of the inner rubber ring of the drain pipe, as a result the sealing effect is not good and water leakage may occur; in addition, since the snakeskin drain pipe is not good enough in its performance of heat preservation, dew is formed easily.

A connecting device for drain pipes according to the preamble of claim 1 is disclosed in document JP 2006 145 064

### SUMMARY OF THE INVENTION

The present invention aims to overcome deficiencies of prior art by providing a connecting device for drain pipes which has advantages of safety and reliability while eliminating stress concentration and undesired dis-engagement.

The goal of the present invention is achieved by the following technical scheme:

A connecting device for drain pipes according to claim 1.

Compared with prior art technology, the present invention has the following advantages:

The connecting device of the present invention comprises a fixed portion, a clamp portion and a connecting portion, the fixed portion is connected with the drainage pipe head, the clamp portion is connected with the drainage pipe tie-in, the fixed portion and the clamp portion are connected via the connecting portion, thereby the stress concentration is substantially eliminated. In a preferred embodiment of the present invention, the connecting device is an elastic connector made of stainless steel, the fixed portion has a fixed ring and the clamp portion has a clamp hook, thereby it is easy and reliable to do assembling operations so as to prevent the drain pipe from undesired dis-engagement by assembling workers or staff on product line due to incorrect operations, while it is simple and quick to detach and replace pipes, e.g., replacing pipes can be accomplished simply by counter-rotating to release the clamp hook in need of maintenance; and since the clamp hook of the elastic connector of the drainage pipe head has a big curved portion with a small opening, after it is fitted in place, the clamp hook is tight for outside but loose for inside, which eliminates stress concentration and prevents the drain pipe from breaking due to stress concentration; in addition, since the elastic connector is made of stainless steel material, it helps to ensure the tight contact between the drainage pipe tie-in and the inner rubber ring of the drain pipe, thereby the connecting device has a better overall sealing.

### BRIEF DESCRIPTION OF THE DRAWINGS

Figure 1 is a schematic structural view of the prior art;
Figure 2 is a schematic view showing the assembling of the present invention;
Figure 3 is a schematic structural view showing the elastic connector of the present invention in shape of a clamp hook;
Figure 4 is a schematic structural view showing the bow-shaped elastic connector of the present invention;
Figure 5 is a schematic structural view showing the S-shaped elastic connector of the present invention;
Figure 6 is a schematic structural view showing the P-shaped elastic connector of the present invention;
Figure 7 is a schematic structural view showing the drainage pipe tie-in in the present invention;
Figure 8 is a schematic structural view showing the drainage pipe head and the elastic connector in the present invention;
Figure 9 is a schematic structural view showing the present invention in use.

### DETAILED DESCRIPTION OF THE PREFERRED EMBODIMENTS

Further features and advantages of the present invention will become apparent from the following embodiments in combination with the appended drawings, in which:

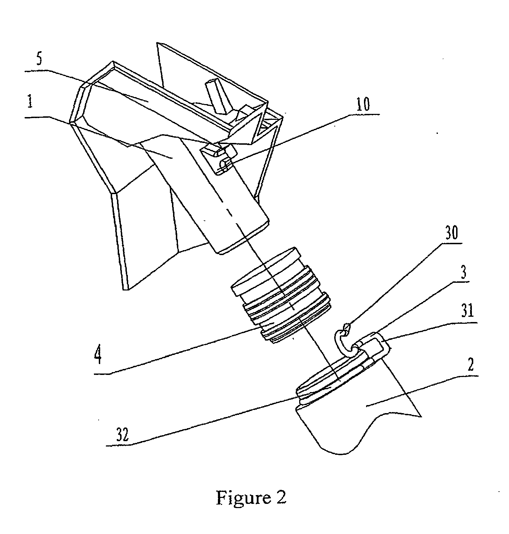

As illustrated in figure 2, a new type of connecting device for drain pipes comprises a drainage pipe tie-in 1 and a drainage pipe head 2, an elastic connector 3 is disposed between the drainage pipe tie-in 1 and the drainage pipe head 2 in order to connect the drainage pipe tie-in 1 with the drainage pipe head 2. Said elastic connector 3 comprises a clamp portion 30, a connecting portion 31 and a fixed portion 32; by means of the elastic connector 3, the drainage pipe head 2 equipped with an inner rubber ring 4 is tightly connected with the drainage pipe tie-in 1.

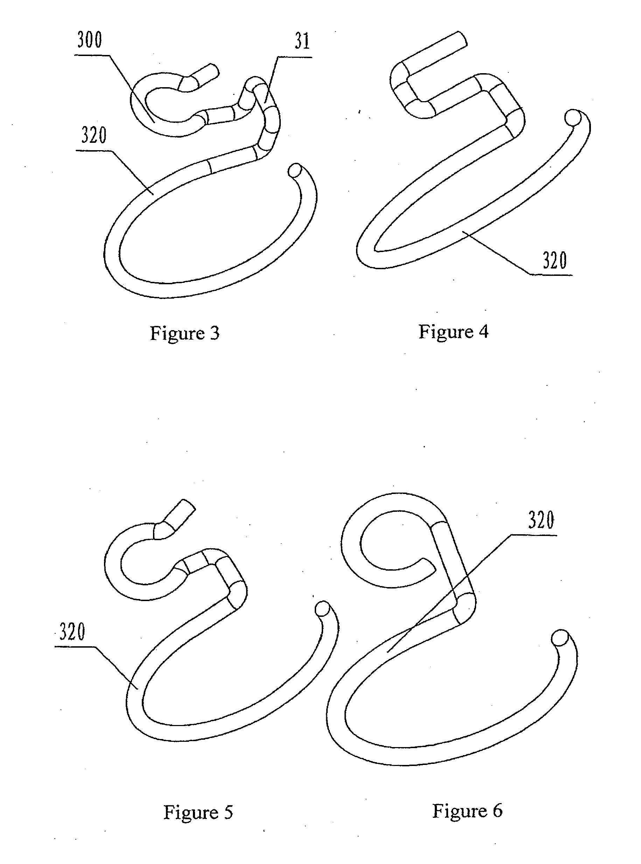

As illustrated from figures 3 to 6, the elastic connector 3 is made of stainless steel, and its clamp portion 30 is a clamp hook 300 having a big curved portion with a small opening, the fixed portion 32 is a fixed ring 320 fitted with the drainage pipe head 2, said clamp portion 30 and said connecting portion 31 can be combined to form a bow-shaped structure, an S-shaped structure or a P-shaped structure. At least one clamp portion 30 is provided to connect with the fixed portion 32. When the clamp portion 30 is the clamp hook 300, the connecting portion lies on a different plane from that of the clamp hook 300 and also different from that of the fixed ring 320. By means of the elastic connector, the drainage pipe head 2 is connected with the drainage pipe tie-in 1, meanwhile the elastic connector provides a certain elastic pre-tightening force so as to avoid too much concentrated stress, and enables a tight connection of the drain pipe 2 and drainage pipe tie-in 1 so as to prevent undesired dis-engagement.

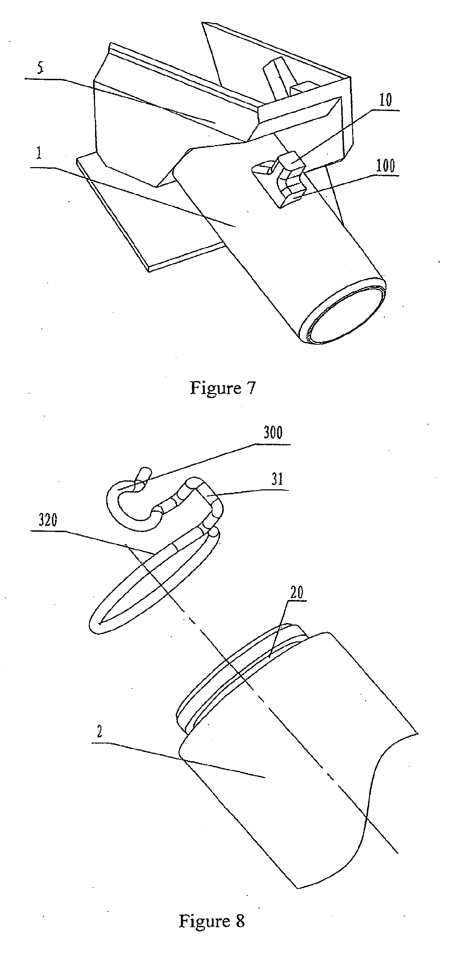

As illustrated in figure 7, a fixed block 10, for clamping with the clamp portion 30 of the elastic connector 3, is disposed on an outer wall of the drainage pipe tie-in 1 with a suitable vertical distance away from the transversal end plane. The fixed block 10 can be in shape of an arch column, a square or a cylinder, wherein the number of the fixed blocks 10 is corresponding to the number of the clamp portions 30. With the fixed block 10 arranged as mentioned above, the elastic connector 3 can be easily and reliably assembled as well as simply and quickly detached or replaced.

As illustrated in figure 8, a circular groove 20 is disposed on the connecting end of the drainage pipe head 2 in order to receive the fixed ring 320 of the elastic connector 3, the fixed ring 320 is fitted into the circular groove 20 of the drainage pipe head 2, the clamp hook 300 of the elastic connector 3 is fitted with the fixed block 10 of the drainage pipe tie-in 1, thereby the drain pipe is connected with the drainage pipe tie-in 1 of the water drip pan 5.

As illustrated in figure 2, when the present invention is in use, in case the drainage pipe tie-in 1 and the drainage pipe head 2 are connected by the elastic connector 3 with its clamp portion 30 being a clamp hook 300, since the elastic connector 3 is made of stainless steel material, the fixed ring 320 is made in a ring-shaped structure with an opening and the diameter of the ring is smaller than that of the circular groove 20 of the drainage pipe head 2, therefore, the fixed ring 320 can be easily fitted into the circular groove 20 of the drainage pipe head 2 and the elastic connector 3 in hook structure can be reliably fixed with the drainage pipe head 2. Then the inner rubber ring 4 is disposed into the drainage pipe head 2, the axis of the drainage pipe head being in line with the drainage pipe tie-in 1 of the water drip pan 5, the fixed block 10 for fixing and locating being disposed on the outer wall of the tapered drainage pipe tie-in 1 and being in line with the pipe axis, and by rotating the snakeskin thermal preservation drain pipe, the drainage pipe head 2 is straightly sleeved onto the drainage pipe tie-in 1; when the end of the drainage pipe head 2 is assembled to contact with the locating surface 100 of the fixed block 10, i.e., the assembling depth required by drain pipe is reached, the inner rubber ring 4 inside the drainage pipe head 2 is closely contacted with the tapered surface of the drainage pipe tie-in 1 to form an interference fit so as to prevent water leakage. Furthermore, the elastic connector 3 fitted with the drainage pipe head 2 is rotated to make its clamp hook 300 aim at the arch column shaped fixed block 10 on the drainage pipe tie-in 1, since the size of the fixed block is slightly larger than that of the opening gap of the clamp hook 300 and smaller than the circular diameter of the clamp hook 300, therefore, the clamp hook 300 of the elastic connector 3 can be guided to engage with the fixed block 10 on the outer wall of the drainage pipe tie-in 1 with relatively small force exerted onto the connecting portion 31 of the elastic connector 3, that is, the drainage pipe is fixed with the drainage pipe tie-in 1 to avoid undesired dis-engagement. When the drain pipe is detached or tested, the elastic connector 3 of the drainage pipe head 2 is counter-rotated to go out of the arch column shaped fixed block 10 on the drainage pipe tie-in 1, thereby the drainage pipe head 2 can be more quickly and more easily dis-engaged from the drainage pipe tie-in 1 in need of drain pipe maintenance or replacement.

When the present invention is being assembled in practice, since stainless steel material made elastic connector 3 comprises a fixed ring 320 fitted with the drain pipe and the clamp hook 300 fitted with the fixed block 10 on the drainage pipe tie-in, therefore it is easy and reliable to do assembling operations so as to prevent the drain pipe from undesired dis-engagement by assembling workers or staff on product line due to incorrect operations, while it is simple and quick to detach and replace pipes, e.g., replacing pipes can be accomplished simply by counter-rotating to release the clamp hook 300 in need of maintenance; and since the clamp hook 300 of the elastic connector 3 of the drainage pipe head 2 has a big curved portion with a small opening, after it is fitted in place, the clamp hook is tight for outside but loose for inside, which eliminates stress concentration and prevents the drain pipe from breaking due to stress concentration; in addition, since the elastic connector 3 is made of stainless steel material, it helps to ensure the tight contact between the inner rubber ring 4 of the drain pipe and the drainage pipe tie-in 1, thereby the connecting device has a better overall sealing.

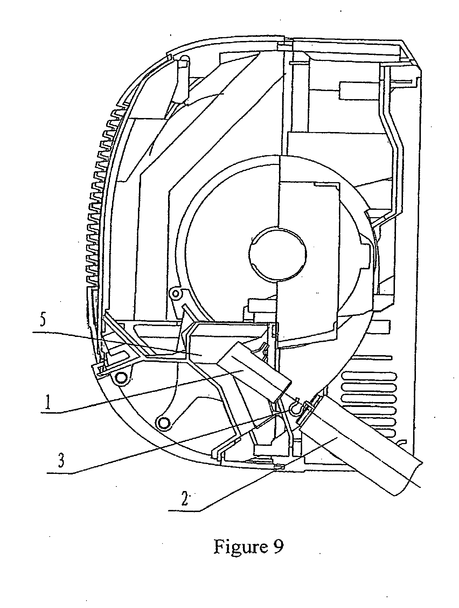

As illustrated in figure 9, the present invention is used in an air conditioner, wherein the drainage pipe tie-in 1 in shape of a protruding cylinder is connected to the rear lower part of the lower end of the water drip pan 5. When condensed dew from the heat exchanger of the air conditioner drips into the water drip pan 5, the dew is gathered at the water drip pan 5 and discharged by the snakeskin thermal preservation drain pipe which is connected with the drainage pipe tie-in 1, wherein the snakeskin drain pipe can preserve heat very well so that dew can not be easily formed. Actually drainage pipe tie-ins 1 are disposed on both sides of the water drip pan 5 inside the air conditioner, the drain pipe can be connected with either one of the left or right drainage pipe tie-in 1 connected with the water drip pan 5, and the drainage pipe tie-in on the other side of the water drip pan 5 can be sealed by a water cock.

## Claims

1. A connecting device for drain pipes, used for connecting a drainage pipe tie-in (1) with a drainage pipe head (2), wherein said connecting device for drain pipes comprises an elastic connector (3) and a fixed block (10); said elastic connector (3) comprises a clamp portion (30), a connecting portion (31) and a fixed portion (32), and said clamp portion (30) is connected with said drainage pipe tie-in (1), said fixed portion (32) is connected with said drainage pipe head (2), said clamp portion (30) and said fixed portion (32) are connected via said connecting portion (31); **characterized in that** said clamp portion (30) is a clamp hook (300) having a big curved portion with a small opening , and **in that** said connecting portion (31) lies on a different plane from that of the clamp hook (300); wherein said fixed block (10) is disposed protrudingly at a proper location on an outer wall of said drainage pipe tie-in (1), and clamps with the clamp portion (30) of the elastic connector (3).

2. The connecting device according to claim 1, **characterized in that**, at least one clamp portion (30) is provided and the number of said clamp portions (30) is corresponding to the number of said fixed blocks (10).

3. The connecting device according to claim 1, **characterized in that**, said fixed block (10) can be in shape of an arch column, a square or a cylinder.

4. The connecting device according to claim 1, **characterized in that**, said fixed portion (32) is a fixed ring (320) detachably fitted with said drainage pipe head (2).

5. The connecting device according to claim 4, **characterized in that**, said connecting portion (31) lies on a different plane from that of said fixed ring (320).

6. The connecting device according to claim 4, **characterized in that**, the fixed ring (320) of said elastic connector (3) is detachably fitted into a circular groove (20) on the connecting end of said drainage pipe head (2).

7. The connecting device according to claim 1, said elastic connector (3) is made of stainless steel.

8. An air conditioner, comprising the connecting device for drain pipes as defined in any one of claims 1 to 7.

## Patentansprüche

1. Verbindungsvorrichtung für Abflussrohre, die zum Verbinden eines Ableitrohr-Kopplungsteiles (1) mit einem Ableitrohrkopf (2) verwendet wird,
wobei die Verbindungsvorrichtung für Abflussrohre einen elastischen Verbinder (3) und einen feststehenden Block (10) umfasst,
wobei der elastische Verbinder (3) einen Klemmteil (30), einen Verbindungsteil (31) und einen feststehenden Teil (32) umfasst,
wobei der Klemmteil (30) mit dem Ableitrohr-Kopplungsteil (1) verbunden ist,
wobei der feststehende Teil (32) mit dem Ableitrohrkopf (2) verbunden ist
und wobei der Klemmteil (30) und der feststehende Teil (32) durch den Verbindungsteil (31) verbunden sind,
**dadurch gekennzeichnet,**
**dass** der Klemmteil (30) ein Klemmhaken (300) ist, der einen großen gekrümmten Teil mit einer kleinen Öffnung aufweist,
und **dass** der Verbindungsteil (31) in einer Ebene liegt, die verschieden ist von jener des Klemmhakens (300),
wobei der feststehende Block (10) an einer geeigneten Stelle an einer äußeren Wand des Ableitrohr-Kopplungsteiles (1) vorstehend angeordnet ist und mit dem Klemmteil (30) des elastischen Verbinders (3) klemmt.

2. Verbindungsvorrichtung nach Anspruch 1,
**dadurch gekennzeichnet,**
**dass** zumindest ein Klemmteil (30) vorgesehen ist und dass die Anzahl der Klemmteile (30) der Anzahl der feststehenden Blöcke (10) entspricht.

3. Verbindungsvorrichtung nach Anspruch 1,
**dadurch gekennzeichnet,**
**dass** der feststehende Block (10) in Form einer Bogensäule, eines Vierecks oder eines Zylinders sein kann.

4. Verbindungsvorrichtung nach Anspruch 1,
**dadurch gekennzeichnet,**
**dass** der feststehende Teil (32) ein feststehender Ring (320) ist, der an dem Ableitrohrkopf (2) lösbar angebracht ist.

5. Verbindungsvorrichtung nach Anspruch 4,
**dadurch gekennzeichnet,**
**dass** der Verbindungsteil (31) in einer Ebene liegt, die von jener des feststehenden Ringes (320) verschieden ist.

6. Verbindungsvorrichtung nach Anspruch 4,
**dadurch gekennzeichnet,**
**dass** der feststehende Ring (320) des elastischen Verbinders (3) in einer ringförmigen Nut (20) an dem Verbindungsende des Ableitrohrkopfes (2) lösbar angebracht ist.

7. Verbindungsvorrichtung nach Anspruch 1, wobei der elastische Verbinder (3) aus rostfreiem Stahl hergestellt ist.

8. Klimaanlage, umfassend die Verbindungsvorrichtung für Abflussrohre nach einem der Ansprüche 1 bis 7.

## Revendications

1. Dispositif de raccord pour tuyaux de drain, utilisé pour raccorder un raccordement de tuyau de drainage (1) avec une tête de tuyau de drainage (2), ledit dispositif de raccord pour tuyaux de drain comprenant un connecteur élastique (3) et un bloc fixe (10) ; ledit connecteur élastique (3) comprend une partie de serrage (30), une partie de raccordement (31) et une partie fixe (32), et ladite partie de serrage (30) est raccordée avec ledit raccordement de tuyau de drainage (1), ladite partie fixe (32) est raccordée avec la tête de tuyau de drainage (2), ladite partie de serrage (30) et ladite partie fixe (32) sont raccordées via ladite partie de raccordement (31) ; **caractérisé en ce que** ladite partie de serrage (30) est un crochet de serrage (300) ayant une grande partie incurvée avec une petite ouverture, et **en ce que** ladite partie de raccordement (31) repose sur un plan différent de celui du crochet de serrage (300) ; dans lequel ledit bloc fixe (10) est disposé en saillie à un emplacement correct sur une paroi externe dudit raccordement de tuyau de drainage (1) et se bloque avec la partie de serrage (30) du connecteur élastique (3).

2. Dispositif de raccord selon la revendication 1, **caractérisé en ce que** l'on prévoit au moins une partie de serrage (30) et le nombre desdites parties de serrage (30) correspond au nombre desdits blocs fixes (10).

3. Dispositif de raccord selon la revendication 1, **caractérisé en ce que** ledit bloc fixe (10) peut avoir la forme d'une colonne arquée, d'un carré ou d'un cylindre.

4. Dispositif de raccord selon la revendication 1, **caractérisé en ce que** ladite partie fixe (32) est une bague fixe (320) montée de manière détachable avec ladite tête de tuyau de drainage (2).

5. Dispositif de raccord selon la revendication 4, **caractérisé en ce que** ladite partie de raccordement (31) repose sur un plan différent de celui de ladite bague fixe (320).

6. Dispositif de raccord selon la revendication 4, **caractérisé en ce que** la bague fixe (320) dudit connecteur élastique (3) est montée de manière détachable dans une rainure circulaire (20) sur l'extrémité de raccordement de ladite tête de tuyau de drainage (2).

7. Dispositif de raccord selon la revendication 1, ledit connecteur élastique (3) étant réalisé à partir d'acier inoxydable.

8. Conditionneur d'air comprenant le dispositif de raccord pour tuyaux de drain selon l'une quelconque des revendications 1 à 7.
